# EUROPEAN PATENT APPLICATION

(11) **EP 2 392 791 A1**
(43) Date of publication of application: **07.12.2011**
(21) Application number: 09839195.6
(22) Date of filing: 30.01.2009
(51) Int. Cl.: F01N 3/08, B01D 53/94, F01N 3/24

(54) **EXHAUST PURIFYING DEVICE**

(71) Applicant: Toyota Jidosha Kabushiki Kaisha, Toyota-shi, Aichi 471-8571 (JP)
(72) Inventor: OHASHI, Nobumoto, Toyota-shi Aichi 471-8571 (JP); KAMOSHITA, Shinji, Toyota-shi Aichi 471-8571 (JP); KAWAGUCHI, Bungo, Toyota-shi Aichi 471-8571 (JP); KOBAYAKAWA, Satoshi, Toyota-shi Aichi 471-8571 (JP); ODA, Tomihisa, Toyota-shi Aichi 471-8571 (JP)
(74) Representative: Kuhnen, Rainer K.
(86) International application number: PCT/JP2009/051624
(87) International publication number: WO 2010/087005

(57) **Abstract**

The present invention relates to an exhaust purifying device configured to more appropriately control a temperature of an oxidation catalyst (C2), which is capable of purifying ammonia, provided in an exhaust system. The present invention is provided with a selective reduction type NOx catalyst (C1) provided in an exhaust passage (P) for achieving a NOx purification capacity under existence of ammonia, an oxidation catalyst (C2) provided downstream of the selective reduction type NOx catalyst (C1), and a heat reserving material (TSM) which is provided between the selective reduction type NOx catalyst (C1) and the oxidation catalyst (C2) and is capable of reserving heat of an exhaust gas. Preferably a phase transition temperature of the heat reserving material (TSM) is a temperature within an ammonia purification temperature region of the oxidation catalyst (C2).

## Description

### TECHNICAL FIELD

The present invention relates to an exhaust purifying device provided in an exhaust system, for example, in an exhaust system for an internal combustion engine and including an oxidation catalyst capable of purifying ammonia.

### BACKGROUND ART

There is generally known an exhaust purifying device including a NOx (nitrogen oxides) catalyst for purifying NOx contained in an exhaust gas, as the exhaust purifying device arranged in an exhaust system for an internal combustion engine such as a diesel engine. Various types of NOx catalysts are known, but among them, there is known in public a selective reduction type NOx catalyst (SCR: Selective Catalytic Reduction) (hereinafter, refer to SCR catalyst) for reducing and removing NOx by addition of a reducing agent. Urea is known as the reducing agent, and urea water (urea solution) is usually injected and supplied in an exhaust gas upstream of the catalyst. When the urea water receives heat from the exhaust gas or the catalyst, ammonia is generated therefrom and NOx is reduced on the SCR catalyst by this ammonia.

The addition amount of such reducing agent has an appropriate range. When the addition amount of the reducing agent excessively increases over the appropriate range, the excessive ammonia passes through the SCR catalyst (ammonia slip). There are some cases where an oxidation catalyst is arranged downstream of the SCR catalyst for oxidizing the ammonia having leaked from the SCR catalyst for purification.

Patent Document 1 discloses an exhaust purifying device configured such that a SCR catalyst is installed in the halfway of an exhaust pipe for reducing and purifying NOx by adding urea water as a reducing agent at the upstream side of the SCR catalyst, and an ammonia slip catalyst (oxidation catalyst) is arranged immediately after the SCR catalyst to oxidize the excessive ammonia. The exhaust purifying device is provided with a particulate filter which is arranged in the exhaust pipe upstream of the addition position of the urea water and is provided with an oxidation catalyst attached to the front portion thereof, a heat reserving material of a ventilation structure capable of reserving heat of the exhaust gas provided between the addition position of the urea water and the SCR catalyst, and fuel adding means for adding fuel into the exhaust gas upstream of the oxidation catalyst attached to the particulate filter. With this construction, the exhaust purifying device in Patent Document 1 is adapted to protect the SCR catalyst from a high-temperature exhaust gas at a forced regeneration time of the particulate filter.

Patent Document 1: Japanese Patent Laid-Open No. 2008-075620

### DISCLOSURE OF THE INVENTION

Incidentally the oxidation catalyst has an oxidation capability which varies depending on a temperature thereof. Therefore, for appropriately purifying ammonia with the oxidation catalyst, it is necessary to more appropriately control the temperature of the oxidation catalyst.

Therefore, the present invention is made in view of the foregoing problem and an object of the present invention is to more appropriately control a temperature of an oxidation catalyst, which is capable of purifying ammonia, provided in an exhaust system.

In order to accomplish the above object, the present invention provides an exhaust purifying device comprising a selective reduction type NOx catalyst provided in an exhaust passage for achieving a NOx purification capacity under existence of ammonia, an oxidation catalyst provided downstream of the selective reduction type NOx catalyst, and a heat reserving material which is arranged between the selective reduction type NOx catalyst and the oxidation catalyst and is capable of reserving heat of an exhaust gas.

A phase transition temperature of the heat reserving material may be a temperature within an ammonia purification temperature of the oxidation catalyst.

In addition, the exhaust purifying device preferably includes supplying means for supplying ammonia to the selective reduction type NOx catalyst and determining means for determining whether or not a temperature of the oxidation catalyst is a temperature out of an ammonia purification temperature region of the oxidation catalyst, wherein the supplying means includes supply amount controlling means for controlling a supply amount of the ammonia and restricting the supply amount of the ammonia in such a manner that, when the determining means determines that the temperature of the oxidation catalyst is a temperature out of the ammonia purification temperature region of the oxidation catalyst, the ammonia does not leak from the selective reduction type NOx catalyst. More specifically when it is determined that the temperature of the oxidation catalyst is a temperature out of the ammonia purification temperature region of the oxidation catalyst, the supply amount of the ammonia is preferably restricted in such a manner that the supply amount of the ammonia is smaller than the supply amount of the ammonia when it is determined that the temperature of the oxidation catalyst is not a temperature out of the ammonia purification temperature region.

Preferably the exhaust purifying device further includes heat amount detecting means for detecting or estimating a heat amount reserved in the heat reserving material, wherein the determining means includes heat amount determining means for determining whether or not the heat amount detected or estimated by the heat amount detecting means is a heat amount out of a predetermined heat amount region, and when the heat amount determining means determines that the heat amount is a heat amount out of the predetermined heat amount region, it is determined that the temperature of the oxidation catalyst is a temperature out of the ammonia purification temperature region.

In addition, the exhaust purifying device preferably includes temperature detecting means for detecting or estimating a temperature of an exhaust gas in an exhaust passage, wherein the determining means determines whether or not a temperature of the oxidation catalyst is a temperature out of the ammonia purification temperature region, based upon a comparison result between the temperature of the exhaust gas detected or estimated by the temperature detecting means and a phase transition temperature of the heat reserving material.

### BRIEF DESCRIPTION OF THE DRAWINGS

[Fig. 1] Fig. 1 is a schematic diagram showing a basic schematic construction example of an exhaust purifying device according to the present invention;
[Fig. 2] Fig. 2 is a graph demonstratively and conceptually showing a generation amount of N₂O or NOx in an oxidation catalyst to a temperature of the oxidation catalyst at the time of introducing a predetermined amount of ammonia to the oxidation catalyst;
[Fig. 3] Fig. 3 is a schematic system diagram for an internal combustion engine to which an exhaust purifying device according to an embodiment in the present invention is applied; and
[Fig. 4] Fig. 4 is a flow chart for addition and supply control of urea water.

### BEST MODE FOR CARRYING OUT THE INVENTION

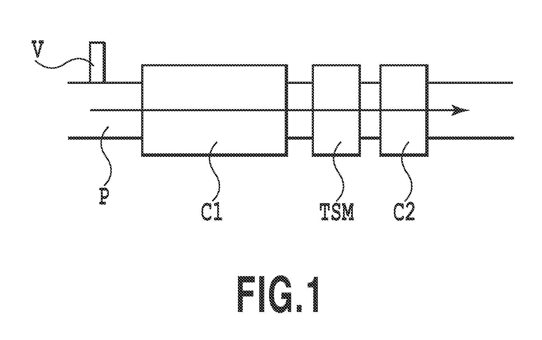

First, a basic schematic construction of an exhaust purifying device according to the present invention will be explained with reference to Fig. 1. In a schematic diagram in Fig. 1, a SCR catalyst C1 provided in a catalytic converter and an oxidation catalyst C2 provided in the same catalytic converter or in a different catalytic converter are arranged in an exhaust passage P in that order (in series) from upstream to downstream. In addition, a heat reserving material TSM is arranged between the SCR catalyst C1 and the oxidation catalyst C2, which is provided in a casing such as the catalytic converter.

It should be noted that an adding valve V of a urea supply device as an example of ammonia supplying means for supplying ammonia to the SCR catalyst C1 is provided in the exhaust passage upstream of the SCR catalyst C1. An addition agent to be supplied from the adding valve V is urea or urea water. However, the ammonia supplying means is not limited to this example and may have various kinds of constructions, for example, may be an ammonia supplying device for injecting and supplying ammonia itself or a catalyst for generating ammonia by promoting a chemical reaction of hydrocarbon components or the like in an exhaust gas.

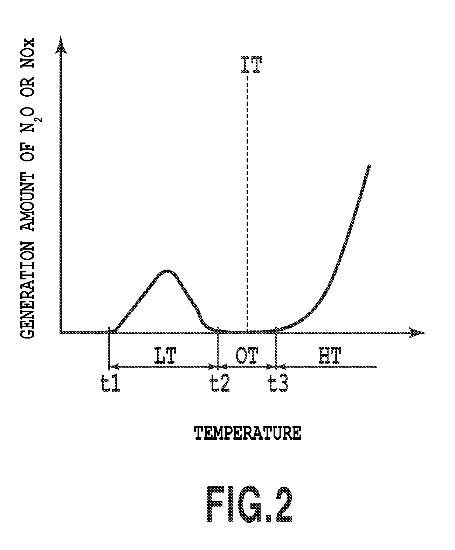

The oxidation catalyst C2 is provided for promoting an oxidation reaction of the ammonia which has not been used in NOx purification on the SCR catalyst C1 and has passed through (has leaked from) the SCR catalyst C1 to purify the ammonia. That is, the oxidation catalyst C2 can be called an ammonia slip catalyst and is provided for solving problems occurring due to the ammonia slip in the SCR catalyst C1. This type of oxidation catalyst C2 may have any construction containing any component, but generally has a temperature region for achieving the oxidation catalyst function at a maximum. Herein since the oxidation catalyst C2 is provided primarily for purification of the ammonia, the temperature region is called "an ammonia purification temperature region". The ammonia purification temperature region will be explained with reference to Fig. 2.

Fig. 2 is a graph demonstratively and conceptually showing a generation amount (ordinate axis) of N₂O or NOx (hereinafter, calledNOx and the like) in the oxidation catalyst C2 to a temperature (abscissa axis) of the oxidation catalyst C2 at the time of introducing a predetermined amount of ammonia to the oxidation catalyst C2. From Fig. 2, it is to be understood that generation of NOx and the like is not substantially made in a temperature region OT (t2 ≤ OT ≤ t3) from temperature t2 to temperature t3. That is, in this temperature region OT, the ammonia is appropriately purified in the oxidation catalyst C2. This temperature region OT corresponds to the above ammonia purification temperature region.

In a temperature region LT (t1 < LT< t2) lower than the ammonia purification temperature region OT, a part of the ammonia can be purified in the oxidation catalyst C2, but the purification of the ammonia is not perfect, and by an imperfect oxidation reaction of the ammonia, particularly generation of N₂O among the NOx and the like can be made. In a temperature region HT (t3< LT) higher than the ammonia purification temperature region OT, a part of the ammonia can be purified in the oxidation catalyst C2, but the oxidation reaction of the ammonia is not sufficiently generated, and particularly generation of NOx among the NOx and the like can be made. It is thought that these are because, since the temperature of the oxidation catalyst C2 is not within the ammonia purification temperature region OT, activation of the oxidation catalyst function in the oxidation catalyst C2 is insufficient or the oxidation reaction in the oxidation catalyst C2 is not made in an appropriate direction. Therefore, for appropriately purifying the ammonia led to the oxidation catalyst C2, it is preferable to provide a temperature controlling device of the oxidation catalyst C2 in order for the oxidation catalyst C2 to more continuously have a temperature within the ammonia purification temperature region. Therefore, in the present invention, a heat reserving material TSM is provided between the SCR catalyst C1 and the oxidation catalyst C2 in such a manner that the oxidation catalyst C2 has a temperature within the ammonia purification temperature region more appropriately. It should be noted that the heat reserving material TSM corresponds to the temperature controlling device of the oxidation catalyst C2.

Hereinafter, the exhaust purifying device according to the present invention will be in detail explained with reference to an embodiment. It should be noted that the embodiment to be explained hereinafter is an example where the present invention is applied to an internal combustion engine, but the present invention may be applied to devices or facilities except for the internal combustion engine, for example, a plant.

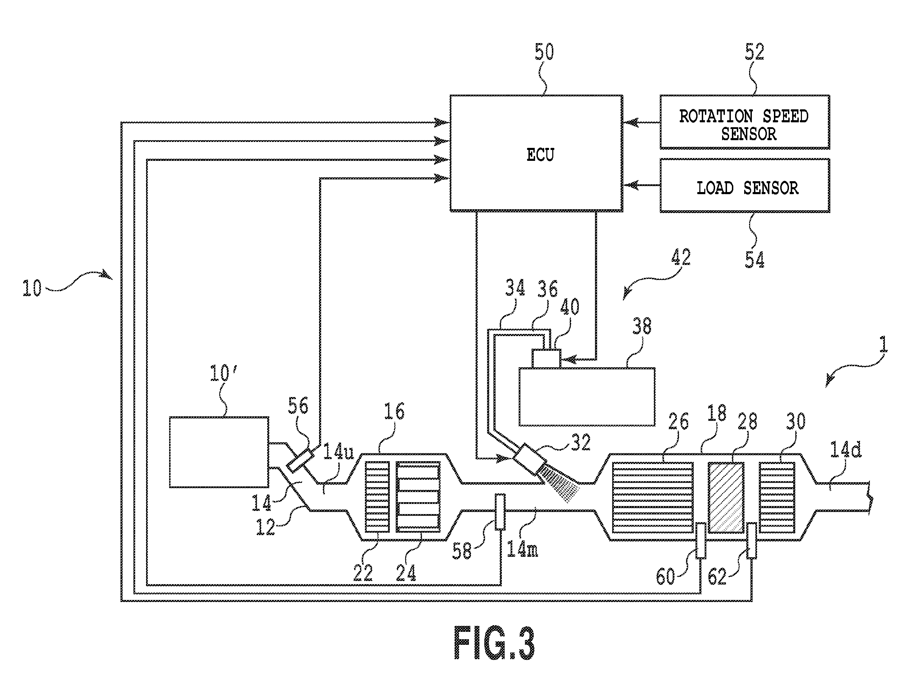

Fig. 3 is a schematic system diagram of an internal combustion engine 10 to which an exhaust purifying device 1 according to an embodiment in the present invention is applied. The internal combustion engine 10 is a compression ignition type internal combustion engine with which an automobile is equipped, that is, a diesel engine, and in Fig. 3, a part of the exhaust system extending from an engine body 10' is expressed in a magnified manner (an intake system, engine internal mechanisms and the like are omitted). A first catalytic converter 16 and a second catalytic converter 18 are serially provided in the order from the upstream in an exhaust passage 14 defined by an exhaust pipe 12 in the internal combustion engine 10. An oxidation catalyst 22 for oxidizing and purifying unburned components (particularly HC) in the exhaust gas and a diesel particulate reduction (DPR) catalyst 24 for trapping and burning particulate matter (PM) in the exhaust gas for removal are arranged in the first catalytic converter 16 in the order from the upstream. In addition, a SCR catalyst 26 as a catalyst having a NOx purification capacity for reducing and purifying NOx in the exhaust gas, a heat reserving material 28 capable of reserving heat and an oxidation catalyst 30 for processing ammonia having passed through the SCR catalyst 26 are provided in the second catalytic converter 18. It should be noted that the SCR catalyst 26 corresponds to the above SCR catalyst C1, the heat reserving material 28 corresponds to the above heat reserving material TSM, and the oxidation catalyst 30 corresponds to the above oxidation catalyst C2.

A urea adding valve 32 is provided between the SCR catalyst 26 and the DPR catalyst 24, that is, in an exhaust passage 14m downstream of the DPR catalyst 24 and upstream of the SCR catalyst 26 for selectively adding urea as a reducing agent to be capable of adding ammonia to the SCR catalyst 26. The urea is used as the form of urea water and is injected and supplied in the exhaust passage 14 toward the SCR catalyst 26 downstream of the urea adding valve 32 therefrom. A urea water tank 38 for reserving the urea water therein is connected to the urea adding valve 32 through a urea water supplying passage 36 defined by a urea water supplying pipe 34 for supplying the urea water to the urea adding valve 32. In addition, a pump 40 is provided for supplying the urea water under pressure toward the urea adding valve 32 from the urea water tank 38. However, a urea concentration of the urea water as the reducing agent may be 32.5% by weight for restricting freeze of the urea water in a cold district or the like.

It should be noted that herein, a urea supplying device 42 is configured to include the urea adding valve 32, the urea water supplying passage 36, the urea water tank 38 and the pump 40. However, the urea water added from the urea adding valve 32 is herein substantially and directly added to the SCR catalyst 26 through the exhaust passage 14, but a dispersion plate or the like for dispersing and directing in a wide range the addition urea to appropriately supply the addition urea all over the SCR catalyst 26 may be provided at an inlet of the second catalytic converter 18 having the SCR catalyst 26 or near it.

The selective reduction type NOx catalyst, that is, the SCR catalyst 26 is herein configured to have zeolite having Si, O, and Al as main components and containing Fe ions. The SCR catalyst 26 reduces and purifies NOx under existence of ammonia generated due to a chemical reaction of addition urea (urea water)) when the catalyst temperature is within an active temperature region (NOx purifying temperature region) and the urea is added from the urea supplying device 42. The urea is supplied as urea water as described above, and is hydrolyzed and thermally decomposed with heat in the exhaust passage 14 (CO(NH₂)₂ → NH₃ + HOCN, HOCN + H₂O → NH₃ + CO₂). As a result, ammonia is generated. That is, when the urea (urea water) is added toward the SCR catalyst 26, the ammonia is supplied on the SCR catalyst 26. This ammonia reacts to NOx on the SCR catalyst 26 to reduce the NOx. It should be noted that as an alternative of the SCR catalyst 26, there may be adopted a catalyst formed by carrying a vanadium catalyst (V₂O₅) on a surface of a substrate composed of alumina or the like. The present invention may allow various types of SCR catalysts.

The DPR catalyst 24 as one kind of a diesel particulate filter (DPF) is of a filter structure and carries noble metals on its surface. That is, the DPR catalyst 24 is a continuously regenerating type catalyst which uses a catalyst function of the noble metal to continuously oxidize (burn) particulate matter (PM) trapped by the filter.

The oxidation catalyst 22 herein has the same construction as that of the oxidation catalyst 30. The oxidation catalysts 22 and 30 each are formed by carrying noble metals such as platinum (Pt) in the honeycomb structure. It should be noted that the oxidation catalyst 22 and the oxidation catalyst 30 each may be configured to be different from the above construction or the oxidation catalyst 22 may be configured to be different in construction from the oxidation catalyst 30. The oxidation catalyst 30 may be, as described above, provided to oxidize the ammonia having leaked from the SCR catalyst 26 for purification processing.

Here, the oxidation catalyst 22, the DPR catalyst 24 and the SCR catalyst 26 are arranged in the exhaust passage 14 in that order from the upstream, but the arrangement order is not limited thereto. However, the oxidation catalyst 30 is arranged downstream of the SCR catalyst 26. Further, the DPF is not limited to adoption of the DPR catalyst 24, but other types of DPF may be used. Specifically the DPF may be a filter configured only as a filter structure, which is structured so that at a point where a continuous operating time of the internal combustion engine exceeds a predetermined time or a pressure difference across the DPF become equal to or more than a predetermined value, for example, fuel injection timing is delayed to generate later burning, as a result oxidizing and burning the trapped particulate matter for regeneration. However, the regeneration in the predetermined timing of the DPF can be applied also to the DPR catalyst 24.

In addition, the heat reserving material 28 is formed of a material capable of reserving heat of an exhaust gas. In regard to the heat reserving material 28, a ceramic of a honeycomb structure, a metal filter, or a metal honeycomb each having a ventilation structure may be adopted. The metal filter is, for example, a filter obtained by laminating and sintering metallic fibers having the micron order, a filter obtained by sintering metallic powder, a filter obtained by laminating and sintering metallic meshes, or a filter obtained by sintering metallic powder to metallic meshes. In regard to the constitution component of the heat reserving material 28, various metals such as aluminum, magnesium, copper, or iron, and ceramics such as oxides such as alumina or silicides or the like may be contained in various percentages. However, the heat reserving material 28 is configured such that the phase transition temperature pt is set within a temperature region different from both temperature regions of the lower temperature region LT and the higher temperature region HT. Specifically the heat reserving material 28 is configured (designed) such that the phase transition temperature pt is set within an ammonia purification temperature region OT of the oxidation catalyst 30. In addition, the phase transition temperature pt of the heat reserving material 28 substantially corresponds to an intermediate temperature IT in the ammonia purification temperature region OT of the oxidation catalyst 30. The intermediate temperature IT in the ammonia purification temperature region OT is an intermediate temperature (t2 + (t3 - t2) / 2) between temperature t2 and temperature t3 in Fig. 2. This is because the heat is appropriately reserved by the heat reserving material 28 and the heat is appropriately released from the heat reserving material 28 to control the temperature of the oxidation catalyst 30 to a temperature within the ammonia purification temperature region. However, the phase transition temperature pt of the heat reserving material 28 may be within the ammonia purification temperature region OT of the oxidation catalyst 30 in such a manner as to control the temperature of the oxidation catalyst 30 more appropriately, but the present invention allows a case where the phase transition temperature is not within the region OT. It should be noted that the phase transition temperature is, as stated schematically regardless of accuracy, for example, a temperature in which a crystal structure of the constitution component in the heat reserving material 28 changes or a temperature in which a change between a solid phase and a liquid phase of the constitution component occurs, herein a temperature in which such a change occurs by heat absorption or heat release.

An electronic control unit (ECU) 50 is provided as control means for managing control of the entire internal combustion engine 10 equipped with the urea supplying device 42. The ECU 50 includes a CPU, a ROM, a RAM, input and output ports, a memory device and the like. The ECU 50 controls a fuel injection valve (not shown) and the like so that a desired internal combustion engine control is performed based upon detection values and the like obtained by using various types of sensors. In addition, the ECU 50 controls the adding valve 32 and the pump 40 so as to control an addition amount of the urea water and addition timing of the urea water.

Sensors connected to the ECU 50 include a rotation speed sensor 52 for detecting an engine rotation speed of the internal combustion engine 10, a load sensor 54 for detecting an engine load, further an exhaust temperature sensor 56 for detecting a temperature of an exhaust gas, and a NOx sensor 58 for detecting a NOx concentration in the exhaust gas. The rotation speed sensor 52 may be a crank angle sensor for detecting a crank angle of the internal combustion engine 10. The load sensor 54 may be an air flow meter sensor or an accelerator opening sensor. The exhaust temperature sensor 56 is herein provided in the exhaust passage 14u upstream of the oxidation catalyst 22, but may be provided in other places or may not be provided. In addition, the NOx sensor 58 is provided in the exhaust passage 14m downstream of the DPR catalyst 24 and upstream of the SCR catalyst 26. However, the NOx sensor may be provided in the exhaust passage 14d downstream of the SCR catalyst 26 or may be provided in both of the exhaust passage 14m upstream of the SCR catalyst 26 and downstream of the DPR catalyst 24 and the exhaust passage 14d downstream of the SCR catalyst 26. However, in a case where the NOx sensor is provided in the exhaust passage 14d downstream of the SCR catalyst 26, the NOx sensor may be provided in the exhaust passage downstream of the SCR catalyst 26 and upstream of the oxidation catalyst 30 or in the exhaust passage downstream of the oxidation catalyst 30

Further, sensors connected to the ECU 50 in the present embodiment include a first temperature sensor 60 and a second temperature sensor 62. The first temperature sensor 60 is provided in the exhaust passage downstream of the SCR catalyst 26 and upstream of the heat reserving material 28. The second temperature sensor 62 is provided in the exhaust passage downstream of the heat reserving material 28 and upstream of the oxidation catalyst 30. That is, the first temperature sensor 60 and the second temperature sensor 62 are provided in such a manner as to sandwich the heat reserving material 28. Herein the first temperature sensor 60 and the second temperature sensor 62 are used for detecting a temperature of an exhaust gas and are provided for detecting (estimating) a heat amount of the heat reserving material 28.

It should be noted that the heat amount detecting means for detecting or estimating a heat amount reserved in the heat reserving material 28 is configured to include the first and second temperature sensors 60 and 62, and a part of the ECU 50. In addition, the temperature detecting means for detecting or estimating a temperature of an exhaust gas in the exhaust passage is configured to include the second temperature sensor 62, the first temperature sensors 60 or the exhaust temperature sensor 56, and a part of the ECU 50. Further, the supplying means for supplying ammonia to the SCR catalyst 26 is configured to include the urea water supplying device 42 and particularly a part of the ECU 50 as its controlling means. The determining means for determining whether or not a temperature of the oxidation catalyst 30 is a temperature out of the ammonia purification temperature region is configured to include a part of the ECU 50.

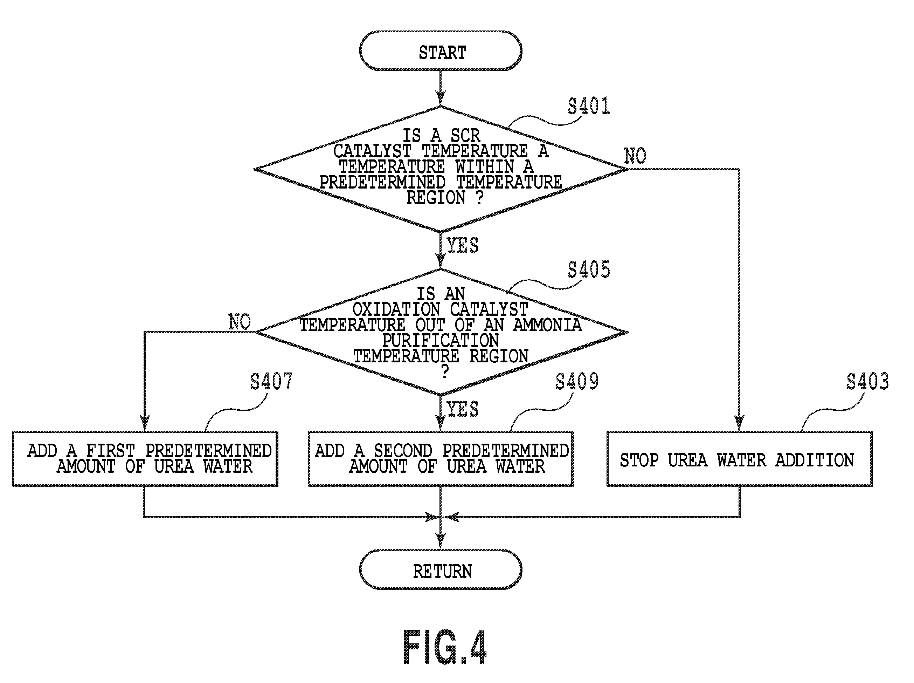

Here, addition and supply control of the urea water will be explained with reference to a flow chart in Fig. 4. The flow in Fig. 4 is repeated every predetermined time. Execution and suspension of the addition of the urea water in the addition and supply control of the urea water is controlled in accordance with a temperature (herein, estimated value) of the SCR catalyst 26. Specifically, when the SCR catalyst temperature is a temperature within a predetermined temperature region, the urea water addition is executed and when the SCR catalyst temperature is not a temperature within the predetermined temperature region, the urea water addition is suspended.

The temperature of the SCR catalyst 26 is herein found by its estimation. Specifically, the ECU 50 retrieves data which is in advance defined by experiments and stored therein, based upon an exhaust temperature detected based upon an output signal from the exhaust temperature sensor 56, thus estimating the SCR catalyst temperature. It should be noted that the estimation method is not limited to the above example. The temperature of the SCR catalyst 26 may be directly detected by using a temperature sensor embedded in the SCR catalyst 26 or may be estimated by using the first temperature sensor 60. Alternatively the temperature of the SCR catalyst 26 may be estimated based upon an engine operating condition defined based upon output signals of the rotation speed sensor 52 and the load sensor 54.

At step S401 it is determined whether or not the temperature of the SCR catalyst 26 is a temperature within a predetermined temperature region. When a negative determination is herein made, the process goes to step S403, wherein the addition of the urea water is suspended. On the other hand, when a positive determination is made at step S401, the process goes to step S405.

At step S405, it is determined whether or not a temperature of the oxidation catalyst 30 is out of its ammonia purification temperature region OT. The determination at step S405 corresponds to the determination on whether or not the temperature of the oxidation catalyst 30 becomes out of or has been out of the ammonia purification temperature region OT (refer to Fig. 2) of the oxidation catalyst 30.

As described above, the heat reserving material 28 is arranged between the SCR catalyst 26 and the oxidation catalyst 30. In addition, the phase transition temperature pt of the heat reserving material 28 is contained within the ammonia purification temperature region of the oxidation catalyst 30 and is substantially an intermediate temperature of the ammonia purification temperature region OT. Therefore, when the temperature of the exhaust gas is high, the heat reserving material 28 reserves its heat to function such that the temperature of the oxidation catalyst 30 does not exceed the ammonia purification temperature region. On the other hand, when the temperature of the exhaust gas is low, when the reserved heat is more than some degrees, the heat reserving material 28 releases the heat to function in such a manner that the temperature of the oxidation catalyst 30 rises to the ammonia purification temperature region OT or the temperature of the oxidation catalyst 30 is not decreased to less than the ammonia purification temperature region OT. In consequence, the temperature of the oxidation catalyst 30 is subjected to an influence of the heat amount reserved in the heat reserving material 28. Therefore, herein the temperature of the oxidation catalyst 30 is determined in consideration of the heat amount of the heat reserving material 28.

In the present embodiment, the temperature of the oxidation catalyst 30 is determined based upon the heat amount of the heat reserving material 28 and the comparison result between the temperature of the exhaust gas and the phase transition temperature of the heat reserving material 28. The heat amount of the heat reserving material 28 is detected (estimated) by retrieving pre-stored data using both temperatures found based upon output signals of the temperature sensors 60 and 62 provided before and after the heat reserving material 28 and a difference between both the temperatures or calculating them using a predetermined calculation formula. In addition, it is determined whether or not the found heat amount of the heat reserving material 28 is a heat amount out of a predetermined heat amount region. The predetermined heat amount region is in advance defined based upon experiments for storage and is a heat amount region less than an upper limit threshold value and exceeding a lower limit threshold value. For example, the upper limit threshold value is possibly a value corresponding to 80% to 90% of a total heat amount which can be reserved in the heat reserving material 28, and the lower limit threshold value is possibly a value corresponding to 10% to 20% of the total heat amount. When it is determined that the heat amount of the heat reserving material 28 is a heat amount out of the predetermined heat amount region, particularly equal to or more than the upper limit threshold value, there is a possibility that the temperature of the oxidation catalyst 30 becomes or has been out of the ammonia purification temperature region OT of the oxidation catalyst 30. Therefore, in this case, it is further determined whether or not a temperature of the exhaust gas exceeds the phase transition temperature pt of the heat reserving material 28. In a case where it is determined that the temperature of the exhaust gas exceeds the phase transition temperature pt of the heat reserving material 28, it is determined that the temperature of the oxidation catalyst 30 becomes out of or has been out of the ammonia purification temperature region OT. However, the temperature of the exhaust gas to be adopted herein may be a temperature obtained by using the first temperature sensor 60, the second temperature sensor 62, or the first and second temperature sensors 60 and 62.

On the other hand, also when it is determined that the heat amount of the heat reserving material 28 is a heat amount out of the predetermined heat amount region, particularly equal to or less than the lower limit threshold value, there is a possibility that the temperature of the oxidation catalyst 30 becomes or has been out of the ammonia purification temperature region OT of the oxidation catalyst 30. Therefore, in this case, further it is determined whether or not a temperature of the exhaust gas is below the phase transition temperature pt of the heat reserving material 28. In a case where it is determined that the temperature of the exhaust gas is below the phase transition temperature pt of the heat reserving material 28, it is determined that the temperature of the oxidation catalyst 30 becomes or has been out of the ammonia purification temperature region OT.

That is, when it is determined that the heat amount of the heat reserving material 28 is a heat amount within the predetermined heat amount region, it is determined that the temperature of the oxidation catalyst 30 is a temperature within the ammonia purification temperature region OT. On the other hand, when it is determined that the heat amount of the heat reserving material 28 is equal to or more than the upper limit threshold value of the predetermined heat amount region and that the temperature of the exhaust gas exceeds the phase transition temperature pt of the heat reserving material 28, it is determined that the temperature of the oxidation catalyst 30 is a temperature out of the ammonia purification temperature region. In addition, when it is determined that the heat amount of the heat reserving material 28 is equal to or less than the lower limit threshold value of the predetermined heat amount region and that the temperature of the exhaust gas is below the phase transition temperature pt of the heat reserving material 28, it is determined that the temperature of the oxidation catalyst 30 is a temperature out of the ammonia purification temperature region.

As a result of this calculation and the like, when a negative determination that the temperature of the oxidation catalyst 30 is not a temperature out of the ammonia purification temperature region is made at step S405, the process goes to step S407, wherein addition of a first predetermined amount of the urea water is made. In this case, even if the ammonia slip occurs in the SCR catalyst 26, since the leaked ammonia can be appropriately treated in the oxidation catalyst 30, the first predetermined amount of the urea water is defined only in consideration of NOx purification in the SCR catalyst 26. In addition, the urea water addition amount and the urea water addition timing are controlled based upon a NOx concentration in an exhaust gas (or NOx amount having a relationship to this NOx concentration) detected based upon an output signal from the NOx sensor 58. Specifically data in advance defined based upon experiments and stored is retrieved with the NOx concentration to define the urea water addition amount and addition timing, based upon which the pump 40 and the urea water adding valve 32 are controlled.

On the other hand, when a positive determination that the temperature of the oxidation catalyst 30 is a temperature out of the ammonia purification temperature region is made at step S405, the process goes to step S409, wherein addition of a second predetermined amount of the urea water is made. The second predetermined amount of the urea water is smaller than the first predetermined amount, and is about a half of the first predetermined amount, for example. This is because, in this case, if the ammonia slip occurs in the SCR catalyst 26, it is difficult to appropriately treat the leaked ammonia in the oxidation catalyst 30. In addition, the urea water addition amount and addition timing are controlled based upon a NOx concentration in an exhaust gas detected based upon an output signal from the NOx sensor 58. Specifically data in advance defined based upon experiments and stored is retrieved with the NOx concentration to define the urea water addition amount and addition timing, based upon which the pump 40 and the urea adding valve 32 are controlled. However, the process goes to step S409, wherein the second predetermined amount of the urea water to be added and supplied may be found, for example, by subtracting the urea water addition amount found by the calculation explained in regard to step S407 through a predetermined calculation.

As described above, when the temperature of the SCR catalyst 26 is a temperature within the predetermined temperature region, the urea water addition is made and the ammonia as the reducing agent is added and supplied to the SCR catalyst 26. The supply amount of the ammonia, when the temperature of the oxidation catalyst 30 is a temperature out of the ammonia purification temperature region, is restricted more than when the temperature of the oxidation catalyst 30 is a temperature within the ammonia purification temperature region. In consequence, it is possible to restrict non-treatment of the ammonia in the oxidation catalyst 30, or generation or non-treatment of the NOx and the like in the oxidation catalyst 30.

As described above, the present invention is explained with reference to the embodiment, but the present invention is not limited thereto. For example, the detection or the estimation of the heat amount of the heat reserving material 28 is not limited to the above embodiment, and a sensor or the like for detecting the heat amount may be provided in the heat reserving material 28 itself or in its circumference to find the heat amount based upon output signal from the sensor or the like. In addition, for example, in step S405, the heat amount of the heat reserving material 28 is considered for determining whether or not the temperature of the oxidation catalyst 30 is a temperature out of the ammonia purification temperature region, but the heat amount may not be considered. Temperature detecting means for detecting or estimating a temperature of the oxidation catalyst 30 itself may be provided, wherein at step S405 it is determined whether or not the temperature of the oxidation catalyst 30 obtained from the temperature detecting means is a temperature within the ammonia purification temperature region. It should be noted that the temperature detecting means for detecting or estimating the temperature of the oxidation catalyst 30 may include a temperature sensor provided directly to the oxidation catalyst 30 or a temperature sensor (for example, temperature sensor 62) provided in the exhaust passage, may include a configuration for using the heat amount of the heat reserving material 28 and/or the temperature in the exhaust passage found as described above to retrieve data or carry out a predetermined calculation by a predetermined calculation formula, thus deriving the temperature of the oxidation catalyst 30.

It should be noted that the urea water adding control may be various kinds of feedback control based upon the temperature in the exhaust passage 14. For example, this control may be feedback control for reducing the urea water addition amount as needed for restricting ammonia leaked in the downstream side from the SCR catalyst 26 each time a temperature downstream of the heat reserving material 28 (exhaust temperature downstream of the heat reserving material) obtained using the temperature sensor 62 provided downstream of the heat reserving material 28 is shifted from the ammonia purification temperature region of the oxidation catalyst 30.

As described above, the present invention is explained with reference to the embodiment and the like, but various aspects of the above embodiment may be partially or entirely combined unless it is contradictory. In addition, the present invention is applicable also to an internal combustion engine other than a compression ignition type internal combustion engine, for example, a spark ignition type internal combustion engine.

As described above, the present invention is explained with reference to the embodiment and the like, but the present invention is not limited thereto. The present invention can include all modifications, applications and its equivalents contained in the spirit of the present invention as defined in claims. Accordingly, the present invention should not be interpreted in a limited manner and can be applied to any other technology within the scope of the concept of the present invention.

## Claims

1. An exhaust purifying device comprising:
a selective reduction type NOx catalyst provided in an exhaust passage for achieving a NOx purification capacity under existence of ammonia;
an oxidation catalyst provided downstream of the selective reduction type NOx catalyst; and
a heat reserving material which is arranged between the selective reduction type NOx catalyst and the oxidation catalyst and is capable of reserving heat of an exhaust gas.

2. An exhaust purifying device according to claim 1, wherein
a phase transition temperature of the heat reserving material is a temperature within the ammonia purification temperature region of the oxidation catalyst.

3. An exhaust purifying device according to claim 1 or 2, further comprising:
supplying means for supplying ammonia to the selective reduction type NOx catalyst; and
determining means for determining whether or not a temperature of the oxidation catalyst is a temperature out of an ammonia purification temperature region of the oxidation catalyst,
wherein the supplying means includes supply amount controlling means for controlling a supply amount of the ammonia and restricting the supply amount of the ammonia in such a manner that, when the determining means determines that the temperature of the oxidation catalyst is a temperature out of the ammonia purification temperature region, the ammonia does not leak out from the selective reduction type NOx catalyst.

4. An exhaust purifying device according to claim 3, further comprising:
heat amount detecting means for detecting or estimating a heat amount reserved in the heat reserving material, wherein the determining means includes heat amount determining means for determining whether or not the heat amount detected or estimated by the heat amount detecting means is a heat amount out of a predetermined heat amount region, and the determining means determines that the temperature of the oxidation catalyst is a temperature out of the ammonia purification temperature region, when the heat amount determining means determines that the heat amount is a heat amount out of the predetermined heat amount region.

5. An exhaust purifying device according to claim 3 or 4, further comprising:
temperature detecting means for detecting or estimating a temperature of an exhaust gas in an exhaust passage, wherein the determining means determines whether or not the temperature of the oxidation catalyst is a temperature out of the ammonia purification temperature region, based upon a comparison result between the temperature of the exhaust gas detected or estimated by the temperature detecting means and a phase transition temperature of the heat reserving material.
